# EUROPEAN PATENT APPLICATION

(11) **EP 4 601 393 A1**
(43) Date of publication of application: **13.08.2025**
(21) Application number: 22965856.2
(22) Date of filing: 18.11.2022
(51) Int. Cl.: H04W 74/08, H04W 84/18

(54) **COMMUNICATION DEVICE, COMMUNICATION METHOD, COMMUNICATION PROGRAM, AND COMMUNICATION SYSTEM**

(71) Applicant: MITSUBISHI ELECTRIC CORPORATION, Chiyoda-ku Tokyo 100-8310 (JP)
(72) Inventor: WATANABE, Taiki, Tokyo 100-8310 (JP); NAGAI, Yukimasa, Tokyo 100-8310 (JP); KAWASHIMA, Yuki, Tokyo 100-8310 (JP); SUMI, Takenori, Tokyo 100-8310 (JP)
(74) Representative: Pfenning, Meinig & Partner mbB
(86) International application number: PCT/JP2022/042854
(87) International publication number: WO 2024/105881

(57) **Abstract**

A judgment unit (113) determines that a low-priority time period during which transmission of frames by a node (101) is set to be of low priority has ended. Upon receiving a notification of the end of the low-priority time period, an initial value change unit (114) changes an initial value of a range that a waiting time can take to a value larger than a value of a normal time. A range determination unit (115) determines the range using the changed initial value. A waiting time determination unit (116) determines the waiting time from the determined range. A transmission unit (117) waits for the determined waiting time and then starts transmitting the frames.

## Description

### [Technical Field]

The present disclosure relates to a communication device, a communication method, a communication program, and a communication system.

### [Background Art]

There is a method for distributing transmission times by inserting a random waiting time before each communication device starts transmitting frames. By using this method, the probability of collision when a plurality of communication devices transmit frames can be reduced. However, if a possible range of the waiting time is fixed, the collisions cannot be sufficiently solved when the transmission opportunities are more likely to be concentrated than a normal time, and conversely, the waiting time cannot help but be longer than necessary when the transmission opportunities are less likely to be concentrated than the normal time. As a conventional technique for solving such a problem, for example, Patent Document 1 is known.

In the transmission method by a terminal (corresponding to the above-mentioned communication device) described in Patent Document 1, when entering a network, the terminal receives a message (hereinafter, referred to as a frame without particular distinction in the present disclosure) containing information about a window (corresponding to the above-mentioned possible range) of a backoff (corresponding to the above-mentioned waiting time) from a base station that has predicted the number of terminals entering the network, and determines a window for transmission using the information. Here, the information about the window is information for increasing an initial value of the window as compared with the case where the terminal has already participated in the network. In this way, when the terminals have the same nature as M2M devices (where a large number of terminals are configured to simultaneously participate in one network, and after a long sleep, enter the network to perform small-volume data transmission in a short time), the probability of collision can be reduced by enlarging the window in a situation where the transmission opportunities are more likely to be concentrated than the normal time, such as when the terminals enter the network.

In the example described in Patent Document 1, the times at which collisions are likely to occur (times at which terminals enter the network) arrive, triggered by transmission and reception of frames from the base station to the terminals (AAI-PAG-ADV in Patent Document 1). Therefore, as suggested in Patent Document 1, if the information about the window is contained in the frames, it is not necessary to transmit and receive additional frames, and consumption of communication resources can be suppressed.

### [Prior Art Documents]

### [Patent Documents]

[Patent Document 1] Unexamined Japanese Patent Application Publication No. 2014-518476

### [Summary of the Invention]

### [Problems to be Solved by the Invention]

On the other hand, there is a case where times at which collisions are likely to occur arrive without such transmission/reception of frames as a trigger. An example of such a case is a network in which a low-priority time period during which transmission of frames by a certain plurality of communication devices is of low priority is predetermined. During the low-priority time period, the plurality of communication devices accumulate transmission frames because it is difficult to obtain a transmission opportunity, and starts to transmit the accumulated transmission frames all at once immediately after the end of the low-priority time period, which makes it easy for collisions to occur. When the technology of Patent Document 1 is applied to such an example, it is necessary to transmit and receive additional frames containing information about the range that the waiting time can take, and thus consuming the communication resources.

The present disclosure is made to solve the above-described problem, and an object of the present disclosure is to prevent consumption of communication resources by eliminating the need to transmit and receive information about the range of waiting time between communication devices.

### [Means for Solving the Problems]

A communication device according to the present disclosure is a communication device that participates in a network in which a low-priority time period during which transmission of transmission frames by the communication device itself is set to be of low priority is predetermined, the communication device includes: a judgment unit to determine that the low-priority time period has ended in the network; an initial value change unit to change an initial value of a width of a range that a waiting time before a start of the transmission can take to a value larger than a value of a normal time when receiving a notification of the end of the low-priority time period from the judgment unit; a range determination unit to determine the range using the changed initial value; a waiting time determination unit to determine the waiting time from the determined range; and a transmission unit to wait for the determined waiting time and then start the transmission of the transmission frames.

### [Effects of the Invention]

The communication device according to the present disclosure participates in a network in which a low-priority time period during which transmission of transmission frames by the communication device itself is set to be of low priority is predetermined. In the network, the communication device determines that the low-priority time period ends, increases the initial value of the width of the range that the waiting time can take after the end of the low-priority time period to be larger than the normal time, and determines the range using the initial value. This eliminates the need for transmission and reception of information about the range of the waiting time between the communication devices, and prevents the communication resources from being consumed.

### [Brief Description of the Drawings]

FIG. 1 is a configuration diagram of a multi-hop network according to Embodiment 1.
FIG. 2 is a time chart showing a communication schedule of the multi-hop network according to Embodiment 1.
FIG. 3 is a diagram showing broadcasting in the multi-hop network according to Embodiment 1.
FIG. 4 is a time chart showing a waiting time according to Embodiment 1.
FIG. 5 is a hardware configuration diagram of a node according to Embodiment 1.
FIG. 6 is a functional block diagram of the node according to Embodiment 1.
FIG. 7 is a time chart showing an operation of a timer by a judgment unit according to Embodiment 1.
FIG. 8 is a flowchart showing an operation of transmission by the node according to Embodiment 1.
FIG. 9 is a time chart showing an initial value to be changed by an initial value change unit according to Embodiment 1.
FIG. 10 is a time chart showing a relationship between a width of a range and its initial value according to Embodiment 1.
FIG. 11 is a time chart showing a relationship between the width of the range and its initial value according to Embodiment 2.
FIG. 12 is a time chart showing transmission times of broadcast frames according to Embodiment 3.
FIG. 13 is a functional block diagram of a node according to Embodiment 3.
FIG. 14 is a flowchart showing an operation of a reception unit and an estimation unit according to Embodiment 3.
FIG. 15 is a configuration diagram of a multi-hop network according to Embodiment 4.
FIG. 16 is a sequence diagram of an entry to the multi-hop network by a node according to Embodiment 4.
FIG. 17 is a functional block diagram of the node according to Embodiment 4.
FIG. 18 is a flowchart showing an operation of a parent candidate storage unit and a parent switching unit according to Embodiment 4.

### [Embodiments for Carrying out the Invention]

### Embodiment 1

The following describes Embodiment 1 in detail with reference to the drawings. Note that Embodiment 1 uses, as a description material, Wi-SUN FAN (Wi-SUN is a registered trademark; FAN stands for Field Area Network), which is a wireless communication standard of a multi-hop network for sensors. However, the network according to the present disclosure is not limited to the network conforming to the above-described standard, but may be any network in which a low-priority time period during which the transmission of a certain frame by a certain communication device is set to be of low priority is predetermined. The type of network is not limited as long as it meets the above requirement. For example, the network may be based on wireless communication of a cellular communication scheme, or it may be based on wired communication.

First, the configuration and operation of the multi-hop network will be described using the Wi-SUN FAN as an example.

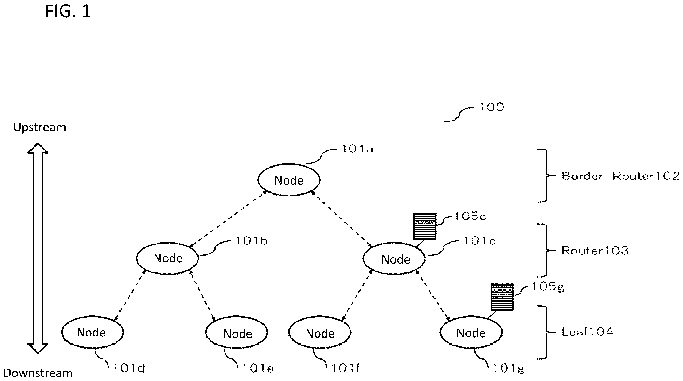

FIG. 1 is a configuration diagram of the multi-hop network according to Embodiment 1. A multi-hop network 100 is configured of a plurality of nodes 101a to 101g. Hereinafter, when the nodes 101a to 101g are not distinguished, they are referred to simply as nodes 101. In FIG. 1, the nodes 101 linked by dotted arrows are wirelessly connected to each other.

The nodes 101 correspond to the communication devices according to the present disclosure. The multi-hop network 100 corresponds to the communication system according to the present disclosure.

The nodes 101 participating in the multi-hop network 100 are connected to other nodes 101 by wireless communication. Here, when attention is paid to a particular node 101, among the nodes 101 directly connected to the particular node 101, a node 101 on the upstream side is referred to as a parent node, and a node 101 on the downstream side is referred to as a child node. For example, the parent node of the node 101b is the node 101a. The child nodes of the node 101b are the node 101d and the node 101e. Therefore, for example, when the entire configuration of the multi-hop network 100 shown in FIG. 1 is described using the term child node, the child nodes of the node 101a are the node 101b and the node 101c, the child nodes of the node 101b are the node 101d and the node 101e, and the child nodes of the node 101c are the node 101f and the node 101g.

Each of the nodes 101 corresponds to one of Border Router 102, Router 103, and Leaf 104.

The Border Router 102 is the most upstream node 101 in the multi-hop network 100. In FIG. 1, the node 101a corresponds to the Border Router 102. The Border Router 102 is directly connected to an external network which is not shown (for example, the Internet or a cloud service) and relays communication between the multi-hop network 100 and the external network.

The Router 103 is not the most upstream node 101 (i.e., the Border Router 102) but corresponds to the nodes 101 which have a child node. In FIG. 1, the node 101b and the node 101c correspond to the Router 103. Although FIG. 1 shows an example in which the Router 103 is configured of only one stage, the Router 103 may be configured of multiple stages. In other words, the parent (or a child) of the Router 103 may be a Router 103.

The Leaf 104 corresponds to the nodes 101 which have no child node. In FIG. 1, the nodes 101d to 101g correspond to the Leaf 104.

A sensor device may be connected to the Router 103 or the Leaf 104. The sensor device is, for example, a smart meter (electricity meter with communication function). In FIG. 1, a smart meter 105c is connected to the node 101c which corresponds to the Router 103, and a smart meter 105g is connected to the node 101g which corresponds to the Leaf 104. The smart meter 105c transmits electricity quantity readings to the node 101c. The node 101c uploads the received electricity quantity readings to the external network via the multi-hop network 100. The electricity quantity read by the smart meter 105g is also uploaded to the external network in a similar manner. Hereinafter, when the smart meter 105c and the smart meter 105g are not particularly distinguished, they are referred to as smart meters 105.

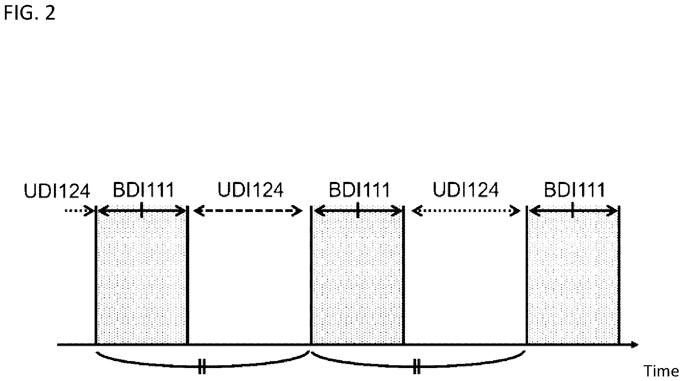

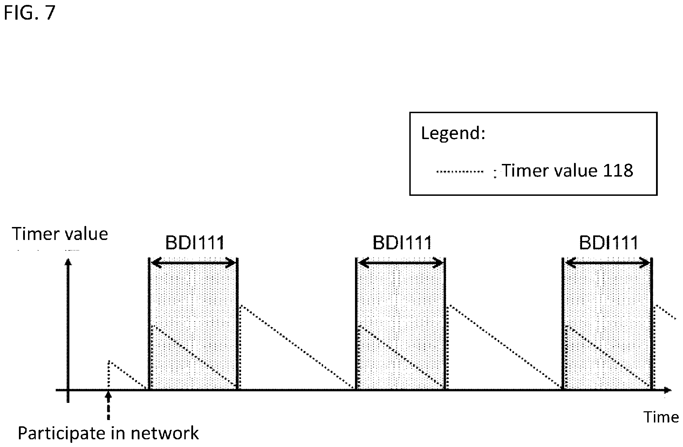

FIG. 2 is a time chart showing a communication schedule of the multi-hop network 100 according to Embodiment 1. A Broadcast Dwell Interval (BDI) 111 is a time period for the Border Router 102 (i.e., the node 101a) to transmit broadcast frames or multicast frames. The BDI 111 arrives periodically at regular intervals, and the time width of each BDI 111 is identical. The start and end times of the BDI 111 are known in advance to all nodes 101 participating in the multi-hop network 100. To be more specific, each of the nodes 101 receives information about the start and end times of the BDI 111 from the Border Router 102 when participating in the multi-hop network 100. Each of the nodes 101 periodically receives the information about the start and end times of the BDI 111 even after participating in the multi-hop network 100. Each node autonomously determines the start and end times of the BDI 111 based on the received information (details of the determination method will be described later with reference to FIG. 7).

The broadcast frames and the multicast frames are frames addressed to the plurality of nodes 101 in the multi-hop network 100. The broadcast frames are addressed to all of the nodes 101, and the multicast frames are addressed to some of the nodes 101.

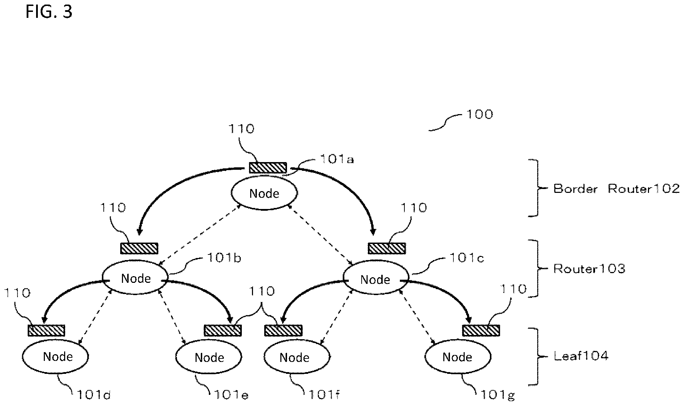

FIG. 3 is a diagram showing broadcasting in the multi-hop network 100 according to Embodiment 1. The Border Router 102 generates broadcast frames 110 and transmits them to the node 101b and the node 101c, which are its own child nodes. Further, the node 101b relays the broadcast frames 110 to the node 101d and the node 101e, and the node 101c relays the broadcast frames 110 to the node 101f and the node 101g. That is, each of the nodes 101 which has received the broadcast frames 110 relays the broadcast frames 110 to its own child nodes 101. The transmission and reception of the broadcast frames 110 in the multi-hop network 100 described above are performed within the time period of the BDI 111, including the relaying by the lower-level nodes. This is the same for the multicast frames.

The description returns to FIG. 2. The time period outside the time period of the BDI 111 is called a Unicast Dwell Interval (UDI) 124. The transmission of unicast frames (frames addressed to one single node 101) originating from any node 101 (including the Border Router 102) is performed within the time period of the UDI 124, that is, outside the BDI 111. For example, the Router 103 or the Leaf 103 transmits the electricity quantity readings received from the smart meter 105 to the Border Router 102 by including it in the unicast frames. The Border Router 102 relays the frames to the external network.

Note that the BDI 111 corresponds to the low-priority time period during which transmission of transmission frames by each node itself is of low priority according to the present disclosure. To be more specific, for each of the plurality of nodes 101 (including the Border Router 102) which wants to transmit a unicast frame, the BDI 111 corresponds to the low-priority time period during which transmission of the unicast frame by the node itself is of low priority. In other words, the low-priority time period during which the transmission of the transmission frames by the node itself is of low priority according to the present disclosure may be a time period during which the transmission of a certain frame is completely prohibited. In the Wi-SUN FAN, it is completely prohibited to transmit the unicast frames during the time period of the BDI 111. Whether the transmission is completely prohibited or the transmission is of low priority (although not prohibited), the concentration of transmission opportunities is more or less caused after the end of such a time period.

Note that the low-priority time period during which the transmission of the transmission frames by the node itself is of low priority according to the present disclosure may not always periodically arrive at a constant interval and may not always be of the same time width. For example, the period and the time width may be updated to different values at a given time. In short, the start and end times of the low-priority time period should be known to the communication devices participating in the network before the low-priority time period actually arrives.

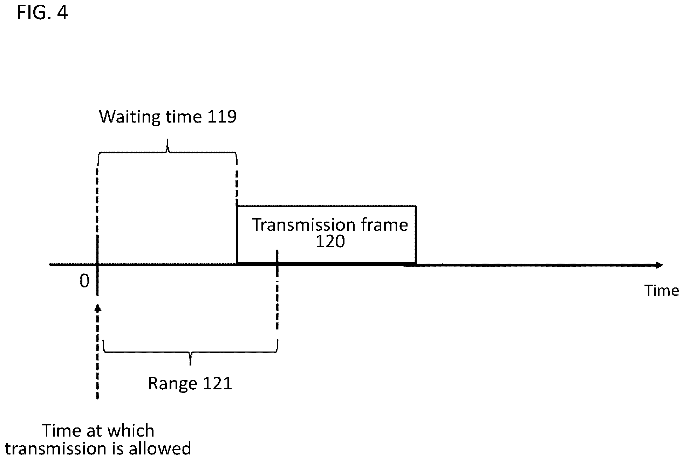

FIG. 4 is a time chart showing a waiting time according to Embodiment 1. The nodes 101 generate transmission frames 120 and store them in their own transmission queue. A necessary condition for a particular node 101 to be able to perform transmission (that is, the time at which transmission is allowed has arrived in FIG. 4) is that the particular node 101 has stored a transmission frame 120 in the transmission queue and no other nodes 101 are performing transmission in the vicinity of the node 101. In the present disclosure, the time at which transmission is allowed is also referred to as the transmission opportunity. When the transmission frame 120 is a unicast frame, it is also a necessary condition that the time is outside the BDI 111 in the multi-hop network 100. If a particular node 101 which is within the time period of the BDI 111 stores a unicast frame in its own transmission queue, the particular node 101 is in a state in which it is allowed to perform transmission immediately after the BDI 111 ends. The nodes 101 each randomly select a waiting time 119 from a possible range 121 that the waiting time 119 can take (hereinafter, also simply referred to as the range 121). As the width of the range 121 is larger, the transmission times of the transmission frames 120 are more distributed, and the probability of collision between the transmission frames 120 can be more reduced. On the other hand, the probability that the waiting time 119 becomes large increases, and the transmission is likely to be delayed. The nodes 101 each start transmission of the transmission frames 120 after the selected waiting time 119 has elapsed. However, if the start of transmission by another node 101 is detected before its own start of transmission of the transmission frames 120, the nodes 101 each temporarily suspend the transmission of the transmission frames 120. The suspended transmission is retried using the same means as in the case where a transmission frame 120 is not received successfully, which will be described later.

If a plurality of the nodes 101 existing in the vicinity start transmission at the same time, collisions between the transmission frames 120 occur, and both of the transmission frames 120 in collision are not received successfully. In this case, the plurality of nodes 101 reselect the waiting times 119, and retry transmission of the transmission frames 120 after the times at which transmission is allowed have arrived. The probability of collision is further reduced by monotonically increasing the width of the range 121 each time retransmission is repeated. Note that there is an upper limit to the number of retries, and when the upper limit is reached, the node 101 being a transmission source discards the transmission frame 120.

As described above, by inserting the random waiting times 119 and then transmitting the transmission frames 120, the probability that the plurality of nodes 101 start transmission at the same time is reduced, the probability of collision of transmission frames is reduced, and the communication resources can be used effectively.

Note that FIG. 4 illustrates an example in which the range 121 starts at the time when the node 101 is allowed to perform transmission. The examples described below in Embodiment 1 illustrate cases in which the range 121 starts at the time when the node 101 is allowed to perform transmission. However, in the communication devices according to the present disclosure, the range 121 may start with a short latency after the node 101 is allowed to perform transmission. In the communication devices according to the present disclosure, the selection of the waiting times 119 from the range 121 need not be completely random and may be biased to some extent.

The configuration and operation of the nodes 101 will be described focusing on the transmission of the unicast frames outside the BDI 111. For convenience of description focusing on the above, in the following description of Embodiment 1, the term "transmission frames 120" refers to unicast frames unless otherwise specified.

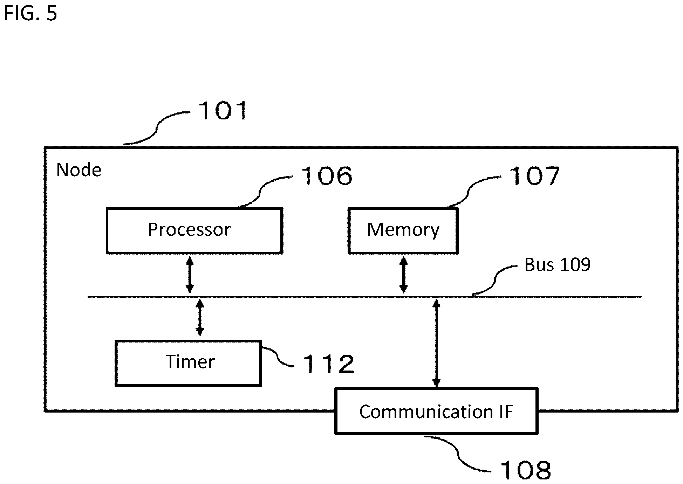

FIG. 5 is a hardware configuration diagram of the node 101 according to Embodiment 1. The node 101 includes a processor 106, a memory 107, a communication IF 108 (IF is an abbreviation of Interface), a timer 112, and a bus 109. The processor 106, the memory 107, the communication IF 108, and the timer 112 transmit and receive signals to and from each other via the bus 109. Note that the node 101 may include a connection IF (not shown) for connection with the smart meter 105.

The processor 106 is, for example, a central processing unit (CPU), a digital signal processor (DSP), a graphical processing unit (GPU), or a field-programmable gated array (FPGA).

The memory 107 is, for example, a static random access memory (SRAM), a dynamic random access memory (DRAM), or a read-only memory (ROM). If the storage capacity of the memory 107 alone is insufficient, the node 101 may include an auxiliary storage device (not shown) as needed. The auxiliary storage device is, for example, a hard disk drive (HDD) or a solid state drive (SSD).

The communication IF 108 is a wireless communication module, and is an interface for communicating with other nodes 101.

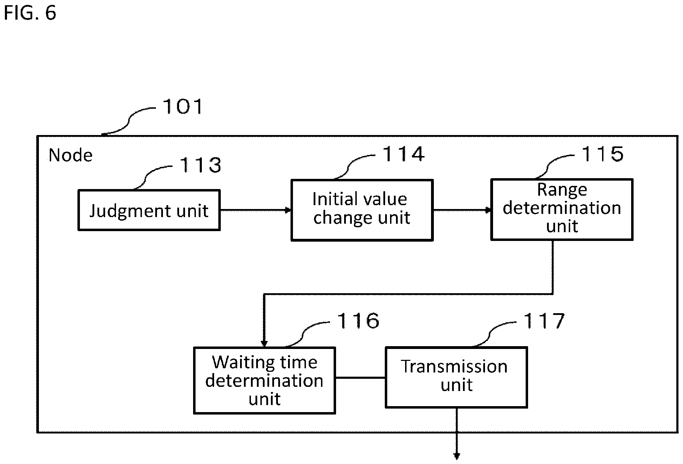

FIG. 6 is a functional block diagram of the node 101 according to Embodiment 1. The node 101 includes a judgment unit 113, an initial value change unit 114, a range determination unit 115, a waiting time determination unit 116, and a transmission unit 117. The judgment unit 113, the initial value change unit 114, the range determination unit 115, and the waiting time determination unit 116 are implemented as the processor 106. Also, the transmission unit 117 is implemented as the communication IF 108. Further, the judgment unit 113, the initial value change unit 114, the range determination unit 115, the waiting time determination unit 116, and the transmission unit 117 store data that needs to be held, in the memory 107 as appropriate. The transmission unit 117 includes a transmission queue (not shown).

The start and end of the BDI 111 is determined by the judgment unit 113. To be more specific, the times until the arrival of the start and end times are counted using the timer 112 with the information about the start and end times of the BDI 111 received from the Border Router 102 as an input.

FIG. 7 is a timer chart showing an operation of the timer 112 by the judgment unit 113 according to Embodiment 1. When the node 101 participates in the network, it receives information about the start and end times of the BDI 111 from the Border Router 102. The judgment unit 113 uses the information to calculate a remaining time until the start of the BDI 111, sets the remaining time in the timer 112, and causes the timer 112 to start counting down. The countdown of a timer value 118 proceeds at a constant rate. Immediately after receiving the notification of the expiration from the timer 112, the judgment unit 113 determines that the start time of the BDI 111 has arrived, and also calculates the remaining time until the end of the BDI 111 and sets the remaining time in the timer 112. Thereafter, the same procedure is used to determine that the start and end times of the BDI 111 have arrived when the timer 112 expires. As described above, by determining the start and end of the BDI 111 using the timer 112, the node 101 can autonomously determine the start and end of the BDI 11 without relying on external notification.

The operation of the timer 112 shown in FIG. 7 is an example. As another example, a timer 112 for determining the start of the BDI 111 and a timer 112 for determining the end of the BDI 111 may be provided separately. In this case, the values set in the timers 112 need to be changed as appropriate from the above description. The module used to measure time may not be a countdown timer, such as the timer 112 shown in Embodiment 1, but may be, for example, a clock for measuring and storing the current time. In this case, it is desirable for the communication devices on the network to synchronize their current times.

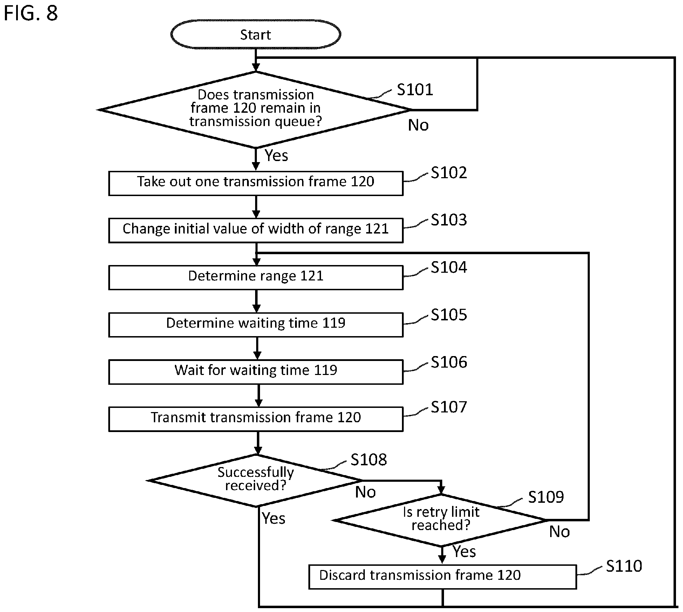

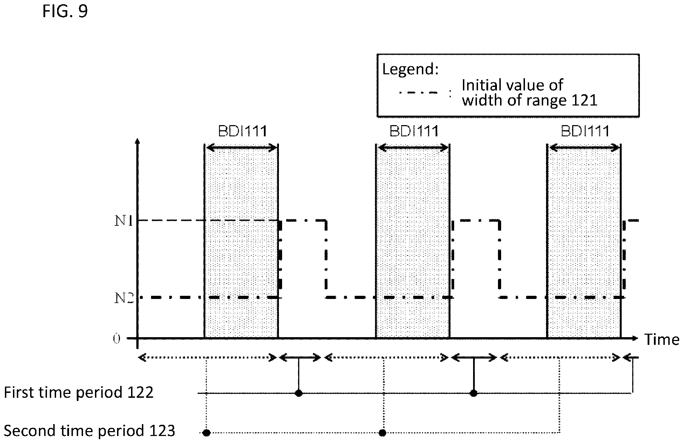

The description returns to FIG. 6. The initial value change unit 114 changes the initial value of the width of the range 121. The initial value is used directly as the width of the range 121 at the time of the first transmission of the transmission frames 120. The change of the initial value by the initial value change unit 114 is performed only at the time of the first transmission of a transmission frame 120, and is not performed at the time of the retry of the transmission of the transmission frame 120. The operation of the initial value change unit 114 will be described in detail later using the flowchart in FIG. 8 and the time chart in FIG. 9.

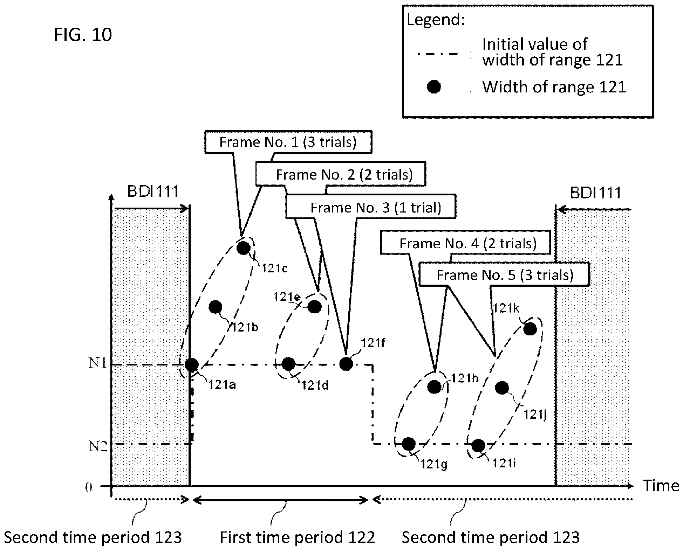

The range determination unit 115 determines the range 121 using the initial value changed by the initial value change unit 114. The range determination unit 115 uses the initial value directly as the width of the range 121 at the time of the first transmission of a transmission frame 120. If the transmission frame 120 is received successfully, the transmission of the transmission frame 120 is finished here, but if it is not received successfully, the transmission of the transmission frame 120 is retried. At the time of retry, the range determination unit 115 calculates the range 121 using the initial value and a predetermined function. A method that monotonically increases the width of the range 121 with each retry is used as the calculation method of the range 121. For example, as a general method, there is a binary exponential backoff (BEB). The operation of the range determination unit 115 will be described in detail later using the flowchart in FIG. 8 and the time chart in FIG. 10.

The waiting time determination unit 116 randomly determines the waiting time 119 from the range 121 determined by the range determination unit 115. As described above, the selection of the waiting time 119 from the range 121 may not be completely random, and may be biased to some extent.

The transmission unit 117 waits for the waiting time 119 determined by the waiting time determination unit 116, and then transmits the transmission frame 120.

FIG. 8 is a flowchart showing the operation of transmission by the node 101 according to Embodiment 1. The node 101 checks whether a transmission frame 120 remains in the transmission queue (S101). If so, the process proceeds to step S102, otherwise it proceeds to step S101.

If a transmission frame 120 remains in the transmission queue, the transmission unit 117 takes out one transmission frame 120 from the transmission queue (S102), and the process proceeds to step S103.

The initial value change unit 114 changes, in accordance with the notification from the judgment unit 113, the initial value of the width of the range 121 that the waiting time 119 can take (S103), and the process proceeds to step S104.

The range determination unit 115 determines the range 121 using the initial value changed in step S103 (S104), and the process proceeds to step S105. Here, when the process proceeds directly from step S103 to step S104, the width of the range 121 to be determined in step S104 is the same value as the initial value changed in step S103. On the other hand, when the process proceeds from step S108 to step S104, which will be described later, the range 121 to be determined in step S104 is calculated using the initial value and the predetermined function. For example, if BEB is used as the calculation method of the range 121, the range determination unit 115 calculates the range 121 such that the width of the range 121 increases with each transmission retry using a monotonically increasing exponential function.

The waiting time determination unit 116 randomly determines the waiting time 119 from the range 121 determined in step S104 (S105), and the process proceeds to step S106.

The transmission unit 117 waits for the waiting time 119 from the time when the transmission is allowed (S106), and the process proceeds to step S107.

The transmission unit 117 transmits the transmission frame 120 (S107), and the process proceeds to step S108.

When the transmission unit 117 has confirmed that the transmission frame 120 has been successfully received at the destination node 101 (S108), the process proceeds to step S101, otherwise it proceeds to step S109. The node 101 determines that the transmission frame 120 has been successfully received, for example, when an acknowledge frame (ACK frame) is returned from the destination node 101 within a time limit.

The transmission unit 117 checks whether a retry limit of the transmission frame 120 has been reached (S109). If so, the process proceeds to step S110, otherwise it proceeds to step S104.

The transmission unit 117 discards the transmission frame 120 (S110) and the process proceeds to step S101.

FIG. 9 is a time chart showing the initial value changed by the initial value change unit 114 according to Embodiment 1. In FIG. 9, the horizontal axis represents time, and the vertical axis represents the size of the initial value of the width of the range 121. Here, a first time period 122 is defined as starting immediately after the end of the BDI 111 and ending at a middle time between the end time of the previous BDI 111 and the start time of the next BDI 111. A second time period 123 is defined as an entire time period except the first time period 122. The initial value change unit 114 changes the initial value of the width of the range 121 to N1, which is a value larger than a normal value N2, from immediately after the end of the BDI 111 (i.e., from immediately after the transition from the second time period 123 to the first time period 122). The initial values N1 and N2 are constant values predetermined in the node 101 itself. Specifically, the values of N1 and N2 may be pre-stored in the memory 107 before the node 101 is shipped as a product. Alternatively, the values of N1 and N2 may be determined by a person installing the node 101 at a location where the node 101 will actually be used and written in the memory 107 at the time of the installation. The initial value change unit 114 returns the initial value to the normal value N2 at the time of transition from the first time period 122 to the second time period 123. As described above, in the time period after the end of the BDI 111 in which the transmission opportunities of the transmission frames 120 are relatively likely to be concentrated, the initial value of the width of the range 121 that the waiting time 119 can take is set to the value N1 larger than the value N2 of the normal time so that the transmission of the transmission frames 120 is sufficiently distributed and the probability of collision of the transmission frames 120 can be reduced. Thus, the communication resources can be used effectively. On the other hand, in the time period during which the transmission of the transmission frames 120 is relatively less likely to be concentrated, the initial value of the width of the range 121 that the waiting time 119 can take is set to be normal so that it is possible to prevent the waiting time 119 from being unnecessarily expanded and to prevent the delay expansion of the transmission of the transmission frames 120.

N1 and N2 used by the initial value change unit 114 need not always be constant values. The initial value change unit 114 may change the values of N1 and N2 in real time in accordance with the congestion status of the network as long as the size relationship of N1 > N2 is satisfied. In order to grasp the congestion state of the network, the communication device measures, for example: the communication quality with the parent node and the child nodes (radio wave intensity or the like); the probability of success in the past transmission and reception; the number of other nodes 101 currently existing in the vicinity; the number of parent node and child nodes for the communication device itself; and the number of hops from the communication device itself to the Border Router 102. For example, if the number of surrounding nodes 101 is large, the transmission times of the transmission frames 120 by the plurality of nodes 101 are highly likely to overlap and cause collisions. Therefore, the initial value change unit 114 may change the value of N1 or N2 to a larger value. When the probability of success in the past transmission and reception is low, it is suspected that the failures have occurred due to the collisions between the transmission frames 120, and therefore the initial value change unit 114 may change the value of N1 or hN2 to a larger value. Specifically, the node 101 may change N1 or N2 to another predetermined value depending on whether the measurement result exceeds a predetermined threshold value. Alternatively, the node 101 may calculate the value of N1 or N2 by predetermining a function that takes the measurement result as an argument.

Also, the node 101 may change the end time of the first time period 122 in real time depending on how long the concentration of transmission opportunities of the transmission frames 120 continues. For example, the end time of the first time period 122 may be set to the time at which one-third of the time period from the end time of the previous BDI 111 to the start time of the next BDI 11 is to elapse. Further, the time widths of the first time periods 122 may not be the same, and the time widths of the second time periods 123 may not be the same. Further, instead of instantaneously returning the initial value from N1 to N2 at the moment of transition from the first time period 122 to the second time period 123, the initial value may be monotonically decreased according to a predetermined function along with the elapse of time or the repetition of successful transmission during the first time period 122 and finally returned to the normal value N2. In the above example, the initial value change unit 114 needs to know information such as the arrival of the transition from the first time period 122 to the second time period 123, the remaining time until the arrival, and the elapsed time after the arrival. In this regard, the judgment unit 113 may be designed to make a determination using the timer 112 and to notify the initial value change unit 114 of the determination.

FIG. 10 is a time chart showing the relationship between the width of the range 121 and the initial value according to Embodiment 1. In FIG. 10, the determination of the range 121 by the range determination unit 115 is illustrated using an example of transmitting a total of five transmission frames 120. In FIG. 10, the horizontal axis represents time. The vertical axis represents the size of the width of the range 121 and the initial value thereof. As described above with reference to FIG. 9, the initial value change unit 114 sets the initial value of the width of the range 121 to the value N1 larger than that of the normal time immediately after the transition from the second time period 123 to the first time period 122, and returns the initial value to the value N2 of the normal time from immediately after the transition from the first time period 122 to the second time period 123.

When the transmission of frame No. 1 is focused, the range determination unit 115 uses the value N1 as the width 121a of the range 121 in its first transmission. This is because, in the case of the first transmission, an initial value N1 changed by the initial value change unit 114 is directly used as the width of the range 121. Thus, in the first transmission of the frame No. 1, the range determination unit 115 uses 0 as the lower limit of the range 121 (i.e., the range 121 is started at the same time as the node 101 is allowed to transmit the frames) and uses N1 as the upper limit of the range 121.

Similarly, both the width 121d to be used for the first transmission of frame No. 2 and the width 121f to be used for the first transmission of frame No. 3 take the value N1 because they are determined in the first time period 122. Both the width 121g to be used for the first transmission of frame No. 4 and the width 121i to be used for the first transmission of frame No. 5 take the value N2 because they are determined in the second time period 123.

In the example of FIG. 10, the range determination unit 115 increases the width of the range 121 with each transmission retry of the transmission frame 120. For example, the node 101 attempted transmission of the frame No. 1 three times, including retries. When the width 121a used in the first transmission, the width 121b used in the second transmission, and the width 121c used in the third transmission are compared, the width 121a < the width 121b < the width 121c holds. Similarly, with respect to the transmission of the frame No. 2, when the width 121d used in the first transmission and the width 121e used in the second transmission are compared, the width 121d < the width 121e holds. Similarly, with respect to the transmission of the frame No. 4, when the width 121g used in the first transmission and the width 121h used in the second transmission are compared, the width 121g < the width 121h holds. Similarly, with respect to the transmission of the frame No. 5, when the width 121i used in the first transmission, the width 121j used in the second transmission, and the width 121k used in the third transmission are compared, the width 121i < the width 121j < the width 121k holds.

As described above, the communication device according to Embodiment 1 participates in a network in which a low-priority time period during which transmission of the transmission frames by the communication device itself is set to be of low priority is determined in advance, determines whether the low-priority time period has ended in the network, sets the initial value of the width of the range 121 that the waiting time 119 can take to the value N1 larger than the value N2 of the normal time for the time period immediately after the end of the low-priority time period, and determines the range 121 using the initial value. Thus, the communication device can change the initial value of the width of the range 121 that the waiting time 119 can take while autonomously determining the start and end of the low-priority time period without depending on a notification from the outside, and the consumption of the communication resources can be prevented by eliminating the need to transmit and receive information about the range that the waiting time can take between the communication devices.

In addition, in the time period after the end of the low-priority time period, in which the transmission opportunities of the transmission frames 120 are relatively likely to be concentrated, the initial value of the width of the range 121 that the waiting time 119 can take is set to the value N1 larger than the value N2 of the normal time so that the transmission of the transmission frames 120 is sufficiently distributed and the probability of collision of the transmission frames 120 can be reduced. Thus, the communication resources can be used effectively.

The judgment unit 113 determines an occurrence of transition from the first time period 122, which is a time period from the end of the low-priority time period to the elapse of a predetermined time, to the second time period 123, which is a time period except the first time period 122. Upon receiving a notification of the occurrence of transition from the judgment unit 113, the initial value change unit 114 returns the initial value of the width of the range 121 to the value N2 of the normal time. Thus, in the time period during which the transmission opportunities of the transmission frames 120 are relatively less likely to be concentrated, the initial value of the width of the range 121 that the waiting time 119 can take is set to be normal so that it is possible to prevent the waiting time from being unnecessarily expanded and to prevent the delay expansion of the transmission of the transmission frames 120.

The judgment unit 113 determines the remaining time until the transition from the first time period 122, which is a time period from the end of the low-priority time period to the elapse of a predetermined time, to the second time period 123, which is a time period except the first time period 122. By using the remaining time notified of by the judgment unit 113, the initial value change unit 114 returns, before the transition occurs, the initial value of the width of the range 121 to the value N2 of the normal time. This makes it possible to gradually return the initial value of the width of the range 121 to the normal value, and to change the initial value in accordance with the degree of concentration of the transmission opportunities of the transmission frames 120.

Although Embodiment 1 has been described as an example of solving the problem of concentration of transmissions of the unicast frames after the end of the BDI 111, the present disclosure can also be applied to solve the problem of concentration of transmissions (relaying) of the broadcast frames 110 or the multicast frames after the end of the UDI 124. To be more specific, the Border Router 102 accumulates a large number of the broadcast frames 110 or the multicast frames in the transmission queue during the time period of the UDI 124. After the end of the UDI 124, the Border Router 102 transmits a large number of the broadcast frames 110 or the multicast frames and the plurality of nodes 101 relay these frames, which may cause congestion. Therefore, at the time of transition from the UDI 124 to the BDI 111, the initial value of the width of the range 121 may be set to the value N1 larger than the value N2 of the normal time. In this way, after the end of the UDI 124, the times of the transmissions (relaying) of the broadcast frames 110 or the multicast frames can be distributed, and the probability of collision of the transmission frames 120 can be reduced.

### Embodiment 2

In Embodiment 2, an example in which the operations of the initial value change unit 114 and the range determination unit 115 are changed is shown.

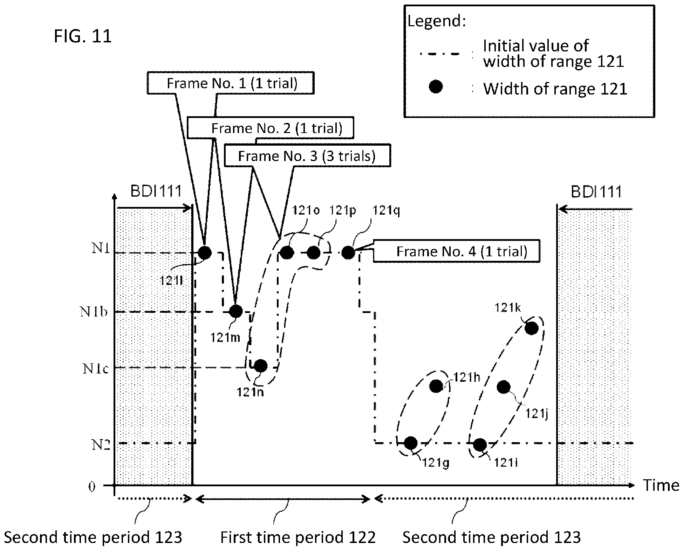

FIG. 11 is a time chart showing a relationship between the width of the range and the initial value thereof according to Embodiment 2. In Embodiment 2, only the operation in the first time period 122 is changed from Embodiment 1, and the operation in the second time period 123 is not changed.

As a point similar to Embodiment 1, the initial value change unit 144 changes the initial value to N1 which is a value larger than the value N2 of the normal time immediately after the transition from the second time period to the first time period. Another point similar to Embodiment 1 is that, in the first attempt of transmission, the range determination unit 115 uses the initial value directly as the width of the range 121. In the example of FIG. 11, the transmission of the transmission frame No. 1 is successful in one attempt, and the width of the range 121l used at that time is equal to the initial value N1.

Embodiment 2 differs from Embodiment 1 in that the initial value change unit 144 decrements the initial value at a fixed rate each time the transmission frame 120 is successfully transmitted in one attempt. In FIG. 11, the transmission of the transmission frame No. 1 is successful in one attempt, so that the initial value in the transmission of the transmission frame No. 2 is decreased to N1b. Similarly, the transmission of the transmission frame No. 2 is successful in one attempt, so that the initial value in the transmission of the transmission frame No. 3 is decreased to N1c. That is, N1 > N1b > N1c holds. Thus, the width 121m in the first attempt of the transmission of the transmission frame No. 2 is equal to the initial value N1b, and the width 121n in the first attempt of the transmission of the transmission frame No. 3 is equal to the initial value N1c. As for the transmission of the transmission frame No. 3 (transmission frame 120), an example is shown in which three attempts are made. That is, the transmission is unsuccessful twice. If the transmission is unsuccessful even once, the initial value change unit 114 changes the initial value to be used in the next transmission to N1. Therefore, the initial value in the fourth transmission of the transmission frame 120 is N1, and N1 is used as the width of the range 121q in the first transmission of the same frame. The range determination unit 115 always uses the value N1 as the width of the range 121 in the retry of the transmission. Therefore, the width 121o in the second transmission of the transmission frame No. 3 (transmission frame 120) and the width 121p in the third transmission of the same transmission frame are equal to the value N1.

As described above, in the communication device according to Embodiment 2, within the first time period 122, the initial value change unit 114 sets the initial value in the next transmission of the transmission frame 120 to N1 when the retry of the transmission of the transmission frame 120 by the transmission unit 117 is required, and sets the initial value in the next transmission of the transmission frame 120 to be smaller than that in the previous transmission of the transmission frame 120 when the retry is not necessary. The range determination unit 115 directly uses the initial value changed by the initial value change unit 114 as the width of the range 121 at the first attempt of the transmission of the transmission frame 120, and uses N1 as the width of the range 121 at the retry. Thus, the initial value can be made sufficiently large in the early stage of the first time period 122 and small in the late stage of the same time period in accordance with the nature that the transmission opportunities of the transmission frames 120 are likely to be concentrated in the early stage and unlikely to be concentrated in the late stage.

If the reception of the transmission frame 120 is unsuccessful and retransmission is required after the width of the range 121 is made smaller than N1, the width of the range 121 can be increased to N1 again, that is, the width of the range 121 can be increased again in accordance with the situation.

### Embodiment 3

In addition to the improvement made to the width of the range 121 that the waiting time 119 can take as shown in Embodiment 1 and Embodiment 2, in Embodiment 3, a method of transmitting the unicast frames within the time period of the BDI 111 without interfering with the transmission and reception of the broadcast frames 110 and the multicast frames will be described. Although the time period of the BDI 111 is basically a time period during which the transmissions (relaying) of the broadcast frames 110 and the multicast frames are prioritized, in Embodiment 3, the unicast frames are transmitted using the opportunities of the intervals between the transmissions of the broadcast frames 110 and the multicast frames.

First, the periodicity of transmission of the broadcast frames 110 or the multicast frames, which is a premise of Embodiment 3, will be described.

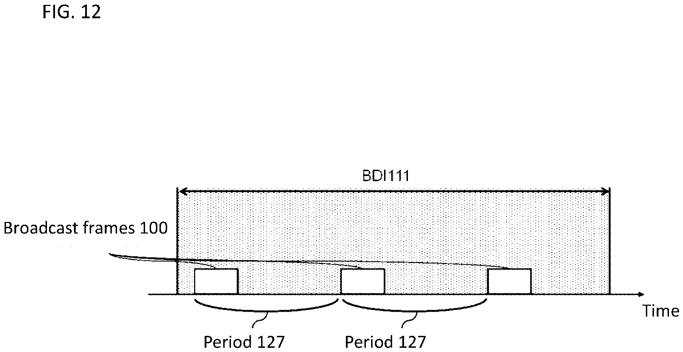

FIG. 12 is a time chart showing the transmission times of the broadcast frames 110 according to Embodiment 3. In FIG. 12, three of the broadcast frames 110 are shown being transmitted within one BDI 111. Here, the period 127 in which each of the three broadcast frames 110 is transmitted is equal. As described above, some of the broadcast frames 110 transmitted by the Border Router 102 are transmitted at the constant period 127. This point is the same for the multicast frames. In the multi-hop network 100 conforming to the Wi-SUN FAN, the period 127 is known to the nodes 101 in advance. Thus, each of the nodes 101 according to Embodiment 3 transmits the unicast frames using the opportunities, which is available in its vicinity, of the intervals between the periodic transmissions (relaying) of the broadcast frames 110 and the multicast frames.

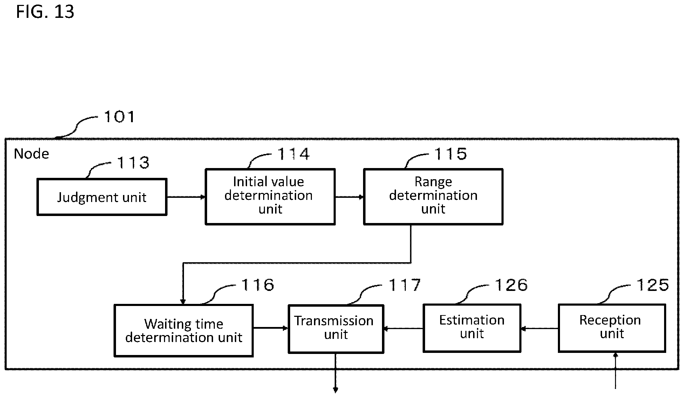

FIG. 13 shows a functional block diagram of the node 101 according to Embodiment 3. The difference from Embodiment 1 is that a reception unit 125 and an estimation unit 126 are added. The reception unit 125 is implemented as the communication IF 108. The estimation unit 126 is implemented as the processor 106.

The reception unit 125 receives the broadcast frames 110 or the multicast frames transmitted from other nodes 101 within the time period of the BDI 111. The reception unit 125 notifies the estimation unit of the time at which the reception occurred.

The estimation unit 126 estimates the time at which the broadcast frames 110 or the multicast frames are to be transmitted (relayed) next, using the time notified of by the reception unit 125 and the period 127 which is known in advance. The estimation unit 126 notifies the transmission unit 117 of the estimated time.

Since the broadcast frames 110 and the multicast frames include types having the periodicity and types not having the periodicity, the estimation unit 126 may estimate the period by focusing on the type having the periodicity. For this purpose, the estimation unit 126 needs to obtain information for distinguishing the above types. Such information can be provided for the estimation unit 126 by appropriately designing the reception unit 125 to analyze the reception frames for generating the information and to output the information to the estimation unit 126.

When the period 127 is not known in advance, the estimation unit 126 may estimate the period 127 and estimate the time at which the broadcast frames 110 or the multicast frames are to be transmitted (relayed) next, using the estimated period 127. For example, one method of estimating the period 127 is to receive the broadcast frames 110 or the multicast frames multiple times and estimate the period 127 from the intervals between the receptions. To increase the accuracy of the estimation, it is preferable to perform statistical processing, such as measuring the values of the intervals several times to obtain samples, using the average or median value of the samples as the estimated value of the period 127, or removing samples with a deviation value of a specific level or higher as noise.

When it is estimated that the time at which the next broadcast frames 110 or the multicast frames are to be transmitted is approaching, the transmission unit 117 considers that it is not in a state in which transmission is possible (i.e. it does not perform transmission). Conversely, if the estimated time is distant from the current time, the transmission unit 117 determines, even within the time period during the BDI 111, that the current time is a time at which the unicast frames can be transmitted. Note that the term "distant" means that there is sufficient time left to transmit one unicast frame.

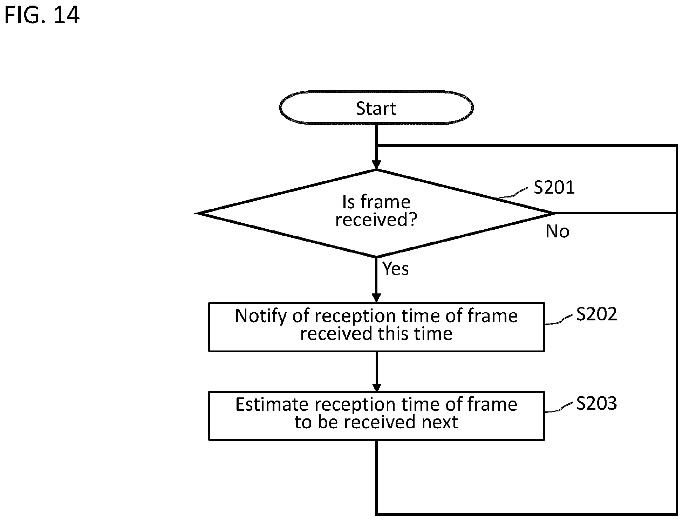

FIG. 14 is a flowchart showing an operation of the reception unit and the estimation unit according to Embodiment 3.

Upon receiving a broadcast frame 110 or a multicast frame from the surrounding within the time period of the BDI 111 (S201), the reception unit 125 notifies the estimation unit 126 of the reception time of the broadcast frame 110 or the multicast frame of this time (step S202). Otherwise, the process returns to step S201.

The estimation unit 126 estimates the time at which the broadcast frames 110 or the multicast frames are to be transmitted (relayed) next, using the time notified of by the reception unit 125 and the period 127, and notifies the transmission unit 117 of the estimated time (S203).

The transmission unit 117 may be configured not to transmit the unicast frames within the time period of the BDI 111 when the number of times the broadcast frames 110 or the multicast frames are transmitted within the time period of the BDI 111 is larger than a predetermined threshold value. The number of times can be statistically calculated by recording the past reception history.

As described above, the communication device according to Embodiment 3 includes the reception unit 125 that receives the reception frames within the low-priority time period and the estimation unit 126 that is notified of the time at which the reception frame is received from the reception unit 125 to estimate the next reception time of the reception frame using the reception time and the reception period 127 of the reception frames, and when the current time is distant from the estimated time within the low-priority time period, the transmission unit 117 considers that it is a time at which the transmission frame can be transmitted. Thus, even in the non-prioritized time period, low-priority frames can be transmitted without interfering with the communication of the frames to be prioritized, the low-priority frames can be prevented from accumulating in the transmission queue, and the transmission of the low-priority frames can be prevented from being concentrated immediately after the end of the non-prioritized time period.

### Embodiment 4

Embodiment 4 shows a method of switching parent nodes when retransmissions occur frequently.

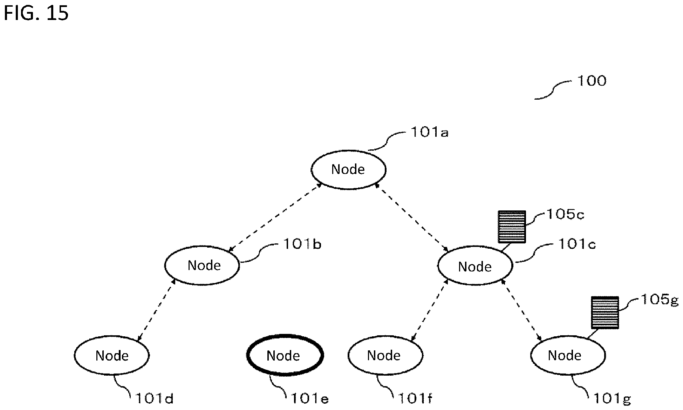

FIG. 15 is a configuration diagram of a multi-hop network 100 according to Embodiment 4. The difference from FIG. 1 and FIG. 3 is that a state before the node 101e participates in the multi-hop network 100 is shown here. That is, the node 101e is about to participate in the multi-hop network 100, and it is not determined whether the node will become the Router 103 or the Leaf 104. Hereinafter, in Embodiment 4, unless otherwise specified, the example in which the node 101e is about to participate in the multi-hop network 100 will be used for description.

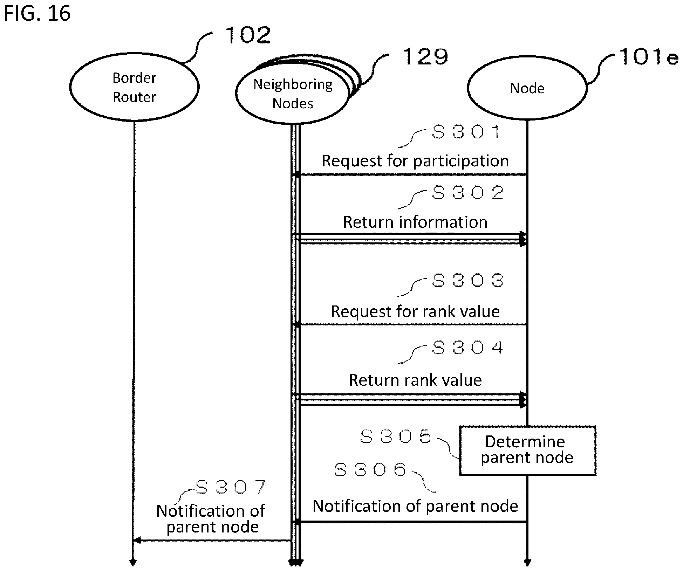

The node 101e checks the presence of the surrounding nodes 101 (hereinafter also referred to as neighboring nodes), and constructs a route to the Border Router 102 based on information from the neighboring nodes. To be more specific, by using metrics (hereinafter, also referred to as rank values) announced by the neighboring nodes and the rank values from itself to the neighboring nodes, the node 101e calculates the rank value from itself to the Border Router 102. The rank value is a numerical value indicating a virtual distance in the network, and the larger the value is, the farther the virtual distance is (for example, the latency is large). The number of hops may be used as the rank value. Alternatively, the rank value may be calculated based on the communication bandwidth. The node 101e prioritizes the neighboring nodes whose calculated rank values are equal to or lower than a threshold value in accordance with the calculated rank values, and records the prioritized neighboring nodes in a parent candidate list stored therein. The node 101e participates in the multi-hop network 100 by selecting the parent candidate having the highest priority as the parent node from among the parent candidate list stored therein. The details of the above-described operation will be described with reference to FIG. 16.

FIG. 16 is a sequence diagram illustrating the participation of the node 101e in the multi-hop network 100 according to Embodiment 4.

The node 101e transmits a request for participation in the multi-hop network 100 to the neighboring node 129 (step S301). Here, there may be a plurality of the neighboring nodes 129.

The neighboring node 129 that has received the request for participation from the node 101e returns information necessary for the node 101e to participate in the multi-hop network 100 (step S302).

The node 101e transmits a request for a rank value to the neighboring node 129 that returned the necessary information (step S303).

Upon receiving the request for the rank value from the node 101e, the neighboring node 129 returns, to the node 101e, the rank value from itself (the neighboring node 129) to the Border Router 101 (step S304).

The node 101e records, in accordance with a condition, some of the neighboring nodes 129 that have returned the rank values in the parent candidate list and determines the parent node (step S305). The specific operation of step S305 will be described below. The node 101e calculates the rank values from itself (the node 101e) to the neighboring nodes 129. This calculation may be performed using the statistics information of the frames transmitted and received in the past. The node 101e calculates the rank values from itself (the node 101e) to the Border Router 102 using the rank values from itself (the node 101e) to the neighboring nodes 129 and the rank values from the neighboring nodes 129 to the Border Router 102. The node 101e records the neighboring nodes 129 having the rank values from itself (the node 101e) to the Border Router 102 equal to or lower than a threshold value in the parent candidate list stored in itself (the node 101e) together with the priorities determined according to the rank values. The node 101e determines the neighboring node 129 with the highest priority as the parent node. That is, the node 101e transmits the frames to the destination via the parent node determined by itself when transmitting the frames in the uplink thereafter.

The node 101e notifies the neighboring node 129 determined as the parent node in step S305 that it has been determined as the parent node (step S306).

The neighboring node 129 that has received the notification relays the notification to the Border Router 102 (step S307). When relaying the notification to the Border Router 102, the neighboring node 129 that has received the notification may add information indicating which node is the parent node of itself (the neighboring node 129) to the notification.

Next, a method will be described in which, after the node 101e participates in the multi-hop network 100, the node 101e switches its own parent node to another candidate when retransmissions are occurring (or have come to occur) frequently.

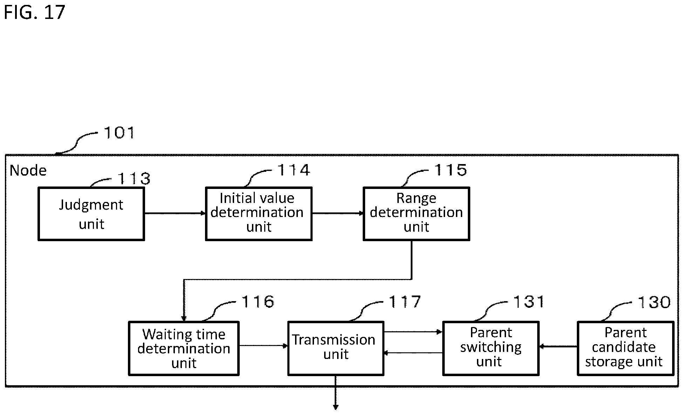

FIG. 17 is a functional block diagram of the node 101 according to Embodiment 4. The difference from Embodiment 1 is that Embodiment 4 includes a parent candidate storage unit 130 and a parent switching unit 131. The parent candidate storage unit 130 and the parent switching unit 131 are implemented as the processor 106. From among the neighboring nodes 129, the parent candidate storage unit 130 stores, as the parent candidate list in the memory 107, those that result in the rank values from itself (the node 101) to the Border Router 102 equal to or lower than a threshold value. After the end of the BDI 111, the parent switching unit 131 selects the parent node from the parent candidate list stored in the parent candidate storage unit and switches the parent to the selected node.

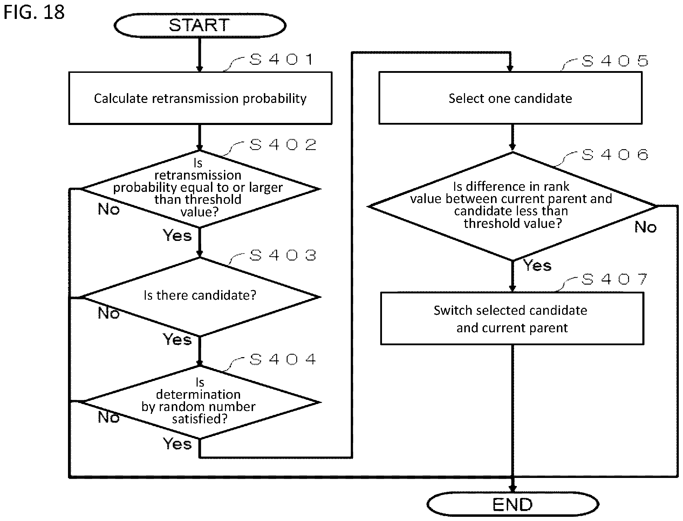

FIG. 18 is a flowchart showing an operation of the parent candidate storage unit 130 and the parent switching unit 131 according to Embodiment 4. Here, it is assumed that the node 101 participates in the multi-hop network 100 before the start of the flowchart in FIG. 18. That is, the flowchart in FIG. 18 shows an operation of switching the parent to another neighboring node 129. After the end of the BDI 111, the flowchart in FIG. 18 is executed before the unicast frames in the transmission queue are transmitted, for example. Alternatively, only step S407 in the flowchart of FIG. 18 is executed at the time mentioned above, and the other steps in the flowchart of FIG. 18 may be executed before the time mentioned above.

The parent switching unit 131 accumulates information about the success or failure of transmission notified from the transmission unit 117, and calculates the past retransmission probability in accordance with the information (step S401). The transmission unit 117 determines whether the transmission is successful or not based on the determination result of step S108 shown in FIG. 8. Alternatively, the transmission unit 117 may calculate the retransmission probability and notify the parent switching unit 131 of the calculated retransmission probability.

The parent switching unit 131 determines whether the calculated retransmission probability is equal to or larger than a threshold value (step S402), and if it is equal to or larger than the threshold, the process proceeds to step S403, and if not, the flowchart of FIG. 18 is terminated.

The parent switching unit 131 refers to the parent candidate list stored in the parent candidate storage unit 130 to determine whether there is another candidate for the parent (step S403), and if there is, the process proceeds to step S404, and if not, the flowchart of FIG. 18 is terminated.

The parent switching unit 131 determines, using a random number, whether to perform parent node switching (step S404), and if it is to be performed, the process proceeds to step S405, and if not, the flowchart of FIG. 18 is terminated. Here, the random number is a random number based on a uniform probability distribution for determining whether or not to switch the parent node, and whether or not to switch the parent node is determined probabilistically.

The parent switching unit 131 selects the neighboring node 129 with the next highest priority of the current parent node as a candidate in the parent candidate list (step S405), and the process proceeds to step S406.

The parent switching unit 131 determines whether the difference in the rank value between the current parent and the candidate selected in step S405 is lower than a threshold value (step S406), and if it is lower than the threshold value, the process proceeds to S407, and if not, the flowchart of FIG. 18 is terminated.

The parent switching unit 131 switches the selected candidate and the current parent (step S407), and the flowchart of FIG. 18 is terminated.

As described above, the communication device according to Embodiment 4 includes the parent candidate storage unit that stores the communication devices having the rank values equal to or lower than a threshold value as the parent candidates, and the parent switching unit that switches the parent of the communication device itself to another communication device after the end of the low-priority time period when the retransmission probability is high, and the parent switching unit selects the parent to switch to from the stored candidates. Thus, the parent to which the transmission frames 120 is transmitted can be switched after the end of the low-priority time period when the retransmission probability is high, and the retransmission probability can be reduced.

Further, by limiting the parent switching to only the transmission of the transmission frames 120 after the end of the low-priority time period, it is possible to use a route with the best communication environment for the transmission frames 120 to be transmitted at other times.

The condition for switching the parent may be changed according to the surrounding situation. The degree of congestion and communication quality of the surroundings can be used in this case. For example, when the number of frames observed within a given time period is equal to or less than a predetermined threshold value and the rank value is good (small), the determination of the random number in step S404 may be adjusted or the threshold value of the difference in the rank value between the current parent and the candidate in step S406 may be decreased in such a manner as to decrease the probability of switching the parent. The communication device can calculate the degree of congestion and the communication quality of the surroundings using, for example, the statistic information obtained from the communication state, the rank values, and the number of neighboring communication devices.

### [Description of Symbols]

- 100: multi-hop network,
- 101a to 101g: node,
- 102: Border Router,
- 103: Router,
- 104: Leaf,
- 105c: smart meter,
- 105g: smart meter,
- 106: processor,
- 107: memory,
- 108: communication IF,
- 109: bus,
- 112: timer,
- 113: judgment unit,
- 114: initial value change unit,
- 115: range determination unit,
- 116: waiting time determination unit,
- 117: transmission unit,
- 118: timer value,
- 110: broadcast frame,
- 111: BDI,
- 119: waiting time,
- 120: transmission frame,
- 121: range,
- 121a to 121q: width of range,
- 122: first time period,
- 123: second time period,
- 124: UDI,
- 125: reception unit,
- 126: estimation unit,
- 127: period,
- 129: neighboring node,
- 130: parent candidate storage unit,
- 131: parent switching unit

## Claims

1. A communication device that participates in a network in which a time period during which transmission of transmission frames by the communication device itself is set to be of low priority is predetermined, the communication device comprising:
a judgment unit to determine that the low-priority time period has ended in the network;
an initial value change unit to change an initial value of a width of a range that a waiting time before a start of the transmission can take to a value larger than a value of a normal time when receiving a notification of the end of the low-priority time period from the judgment unit;
a range determination unit to determine the range using the changed initial value;
a waiting time determination unit to determine the waiting time from the determined range; and
a transmission unit to wait for the determined waiting time and then start the transmission of the transmission frames.

2. The communication device according to claim 1, wherein the waiting time determination unit determines the waiting time at random from the range.

3. The communication device according to claim 2, wherein the range determination unit uses the initial value directly as the width of the range in a first attempt of transmission of the transmission frames by the transmission unit.

4. The communication device according to claim 3, wherein
the judgment unit determines an occurrence of a transition from a first time period being a period of time from the end of the low-priority time period to an elapse of a predetermined time, to a second time period being a period of time except the first time period, and
the initial value change unit returns the initial value of the width of the range to the value of the normal time when receiving the notification of the occurrence of the transition from the judgment unit.

5. The communication device according to claim 3, wherein
the judgment unit determines a remaining time until a transition from a first time period being a period of time from the end of the low-priority time period to an elapse of a predetermined time, to a second time period being a period of time except the first time period, and
the initial value change unit returns the initial value of the width of the range to the value of the normal time by using the remaining time notified from the judgment unit before the transition.

6. The communication device according to claim 4, wherein, within the first time period,
the initial value change unit sets the initial value in the next transmission of the transmission frames to the larger value when a retry of the transmission of the transmission frames by the transmission unit is required, and sets the initial value in the next transmission of the transmission frames to be smaller than that in the previous transmission of the transmission frames when the retry is not required, and
the range determination unit uses the larger value as the width of the range when the transmission of the transmission frames is retried.

7. The communication device according to claim 1, further comprising:
a reception unit to receive a reception frame within the low-priority time period; and
an estimation unit to be notified of a time at which the reception frame is received by the reception unit and estimate a next reception time of a reception frame using the time at which the reception frame is received and a reception period of the reception frame,
wherein, when a current time is distant from the estimated time within the low-priority time period, the transmission unit considers that it is a time at which a transmission frame can be transmitted.

8. The communication device according to claim 1, further comprising:
a parent candidate storage unit to store a communication device whose rank value is equal to or lower than a threshold value as a candidate for a parent;
a parent switching unit to switch its parent to another communication device after the end of the low-priority time period when a retransmission probability is high,
wherein the parent switching unit selects a parent to switch to from among the stored candidates.

9. A communication method to be used by a communication device that participates in a network in which a time period during which transmission of transmission frames by the communication device itself is set to be of low priority is predetermined, the communication method comprising:
determining that the low-priority time period has ended in the network;
changing an initial value of a width of a range that a waiting time before a start of the transmission can take to a value larger than a value of a normal time when determining the end of the low-priority time period;
determining the range using the changed initial value;
determining the waiting time from the determined range; and
waiting for the determined waiting time and then starting the transmission of the transmission frames.

10. A communication program causing a computer that participates in a network in which a time period during which transmission of transmission frames by the computer itself is set to be of low priority is predetermined to perform processes of:
determining that the low-priority time period has ended in the network;
changing an initial value of a width of a range that a waiting time before a start of the transmission can take to a value larger than a value of a normal time when receiving a notification of the end of the low-priority time period from the determining process;
determining the range using the changed initial value;
determining the waiting time from the determined range; and
waiting for the determined waiting time and then starting the transmission of the transmission frames.

11. A communication system comprising a plurality of communication devices each of which participates in a network in which a time period during which transmission of transmission frames by the communication device itself is set to be of low priority is predetermined, the communication device comprising:
a judgment unit to determine that the low-priority time period has ended in the network;
an initial value change unit to change an initial value of a width of a range that a waiting time before a start of the transmission can take to a value larger than a value of a normal time when receiving a notification of the end of the low-priority time period from the judgment unit;
a range determination unit to determine the range using the changed initial value;
a waiting time determination unit to determine the waiting time from the determined range; and
a transmission unit to wait for the determined waiting time and then start the transmission of the transmission frames.
